# EUROPEAN PATENT SPECIFICATION

(11) **EP 1 632 415 B1**
(45) Date of publication and mention of the grant of the patent: **17.07.2013**
(21) Application number: 05018008.2
(22) Date of filing: 19.08.2005
(51) Int. Cl.: B62B 1/10

(54) **Tilting bracket for a sack truck**
Kipphebel für eine Sackkarre
Levier de basculement pour un diable

(30) Priority: 03.09.2004 DK 200401336
(43) Date of publication of application: 08.03.2006
(73) Proprietor: RAVENDO A/S, 8800 Viborg (DK)
(72) Inventor: Heiss, Jan Ahm, 8981 Spentrup (DK)
(74) Representative: Nielsen, Leif

(56) References cited:
- US-A- 1 539 933
- US-A1- 2004 090 027

## Description

### Field of the Invention

The present invention concerns a sack truck with a support frame which may fastened to a carrier means, where the support frame and the carrier means are connected to at least one axle, where at least one wheel is provided rotatably on the shaft, where the sack truck includes foot-operated tilting means for assisting in tilting the support frame and the carrier means, where the foot-operated tilting means are fastened rotatably to a connecting point at the transition between the support frame and the carrier means (4), where the foot-operated tilting means may bear on the axle when actuated.

### Description of Prior Art

In the International publication with publication number WO 00/63058 and title "Hand truck having ground engaging lever for tilting" there is disclosed a sack truck which is equipped with a number of struts which by actuation bear on a base. These struts are rotatably connected to the frame of the sack truck. In an embodiment, when actuated these struts carry the whole weight of the sack truck. In a second embodiment, these struts push the front of the sack truck upwards. In this second embodiment, the wheels remain in contact with the base. In the first embodiment, the point of contact of the struts against the base functions as a fulcrum, allowing the wheels to be lifted off the same base. In both embodiments, the struts are actuated by means of a foot or hand-operated handle.

A drawback of the above indicated art is that tilting occurs by means of struts bearing on a base. Large compressive forces may be transmitted from the struts to the base if the sack truck is to lift a heavy load off a floor. The base may thereby be damaged.

US 2004/0090027 is considered as being the closest prior art, it discloses a hand truck having all the features of the preamble of claim 1, it describes a hand truck having load shifting member which tilts the hand truck under conditions of greater leverage than that available by grasping the frame of the hand truck is disclosed. The load shifting member comprises a spring retracting lever rotatably attached to an axle journaled from the frame of the hand truck such that when in a retracted position, the lever is substantially parallel to the frame. Pulling on the upper end of the lever rotates the lever such that the lower end of the lever engages the lower portion of the hand truck frame, shifting the center of gravity of the loaded hand truck such that it may be more easily tilted to a position for moving the hand truck. A spring returns the lever to a retracted position when not in use.

US 2004/0090027 concern the use of a hand lever for tilting the hand truck when it carries a heavy load. A drawback is that there is only one handle for tilting, which can lead to unstable operation by tilting because it is nearly impossible to support the normal handles during the tilting operation.

### Brief description of the invention

It is the purpose of the invention to provide a sack truck which is easy to tilt in a very stable way about the centre axis of the wheels with a heavy load. At the same time, the purpose is to achieve tilting of a sack truck with a heavy load without damaging a base.

This may be achieved, if a sack truck as specified in the introduction is modified so that the foot-operated tilting means achieve a first inactive position, where the foot-operated tilting means are disposed along the support frame, and where the foot-operated tilting means have at least a second position, where the tilting means, when applied, can be unfolded for achieving bearing on the axle, where foot-operation of the tilting means may cause a pivoting movement of the support frame and the carrier means around the axle.

Hereby may be achieved easier tilting of a sack truck about the wheel axis. This may be effected without acting on the base by other than the wheels of the sack truck. The sack truck may thereby be particularly suited for transport of heavy loads on sensitive floors, such as in private homes and in sports centres.

Advantageously, between the frame and the tilting means there are one or more retracting means, where the retracting means may move the tilting means from the second active position to the first inactive position, where the tilting means are disposed substantially along the support frame. Hereby may be achieved a sack truck which is easy to operate, since the retracting means ensure that the tilting means are pivoted up after use, so that they do not interfere with the user of the sack truck during transport.

The tilting means themselves may advantageously be designed as an arm with a foot lever, where the arm may be pivotably fastened to the connecting point. Hereby may be achieved a simple design which provides the user the possibility of tilting the sack truck into a driving position by treading down on the foot lever and thereby use the previously mentioned arm as a lever. The foot lever may ensure the user a better foot engagement, as it may be envisaged that the foot lever or tread pedal is made of a skid-proof material.

In an alternative embodiment, the tilting means may be designed as a tilting bracket with two arms which are rotatably fastened to the connecting points. Hereby may be achieved a tilting means with a longer treading surface, which may be particularly advantageous as it is possible for a person to select any of his legs when operating the tilting bracket.

Advantageously, the arms of the tilting means may be telescoping. Hereby may be achieved that the user, by extending the arms, may attain a greater moment of force with respect to pivoting around the axle of the wheels. In this way it will also be possible for even light persons to operate the sack truck while it is heavily loaded.

The carrier means may advantageously be fastened pivotably to the support frame, so that it has a first position substantially perpendicular to the support frame, and a collapsed position which is substantially along the support frame. Hereby may be achieved a sack truck which does not take up much space when not in use. Space may be a critical factor, particularly for moving vans, why a sack truck according to the invention will be particularly suited in connection with moving.

Advantageously, the support frame may also be telescoping. Hereby may be achieved that the sack truck can be adjusted in height, so that individual differences may be accommodated for. Furthermore, it may be possible to collapse the sack truck so much, that essentially it does not take up more in height than the length of the carrier means. Such a collapsible sack truck will take up so little space that it may advantageously be carried in a car, e.g. for shopping.

### Short Description of the Drawing

The invention is described in more detail with reference to the drawing, where:
- Fig. 1: shows a cross-section of an embodiment of a sack truck according to the invention with an embodiment of the tilting means;
- Fig. 2: shows a sack truck according to the invention as seen from behind, and with a second embodiment of the tilting means;
- Fig. 3a: shows a second embodiment of a sack truck according to the invention;
- Fig. 3b: shows a detail of Fig. 3a;
- Fig. 4: shows a detail an alternative embodiment of a sack truck according to the invention; and
- Fig. 5: shows a detail of the same embodiment as shown on Fig. 4, but with the tilting plate in another position.

### Detailed Description of the Invention

Fig: 1 shows a section through a possible embodiment of a sack truck 1, consisting of a support frame 2 which is fastened to a carrier means 4, where a wheel axle 6 is fastened to the support frame 2 and the carrier means 4 by not shown fastening means, and where at least one wheel 8 is fastened to this wheel axle. In connection with the support frame 2 and the carrier means 4, tilting means 10 are shown which are pivotably connected to the connection point by a bearing joint 12 between the support frame 2 and the carrier means 4. The tilting means 10 are provided in the shape of an arm 20 which has a foot lever or treading pedal 16 at its extreme end. A retracting spring 24 is fastened to the arm 20, where the opposite side of the spring 24 is connected with the support frame 2.

In practical use of the sack truck 1, where a large, heavy load is placed on the carrier means 4, it will be required to perform a tilting process by pulling the support frame 2 in order to lift carrier means 4 including the load off the base 3, so that the wheels 8 of the sack truck may rotate freely around the axle 6. In order to reduce the force which a person is possibly to use in order to perform tilting of the sack truck 1, the means 10 in the form of the arm 20 and the foot lever 16 are used, so that the person operating the sack truck 1 treads on the lever 16 simultaneously with pulling the support frame 2, whereby tilting the sack truck 1 is substantially facilitated. Pivoting around the wheel axle 6 occurs, as the support arm 20 acts as a lever where a downwards directed force, from the principle of force-times-length-of-arm about the wheel axle 6, contributes to lifting even a very heavy burden, which is easily tilted.

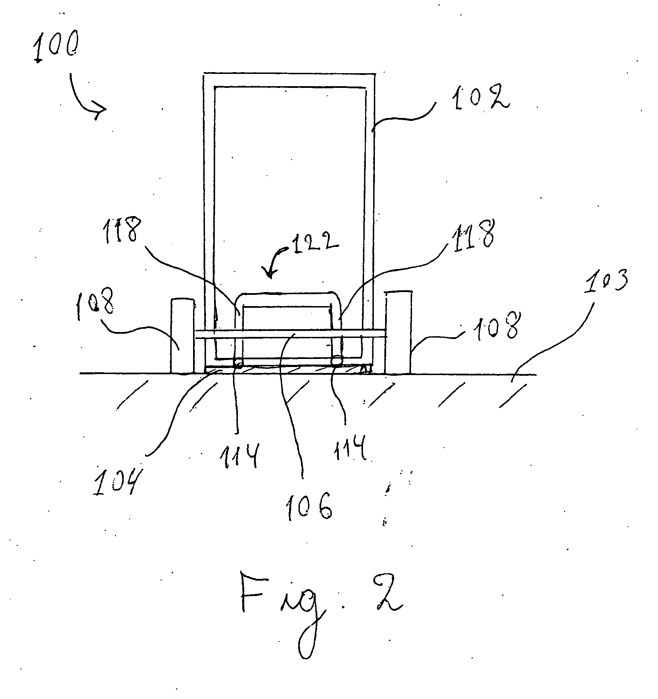

On Fig. 2 is shown an alternative embodiment of a sack truck 100, where the sack truck 100 is seen from behind. The sack truck 100 consists of a support frame 102 which is fastened to a carrier means 104, where the support frame 102 is connected with an axle 106 to which two wheels 108 are fastened. On Fig. 2 is also shown a tilting bracket 122 consisting of two arms 118 which are fastened to the connecting point between the support bracket 102 and the not shown carrier means at bearing joints 114.

By using the sack truck 100, the bracket 122 is used for operation by foot simultaneously with pulling the support frame 2, whereby a possible load provided on the not shown carrier means is lifted off the ground 103 by pivoting about the wheel axle 106, as the bracket 122 with the arms 112 is bearing on the wheel axle 106.

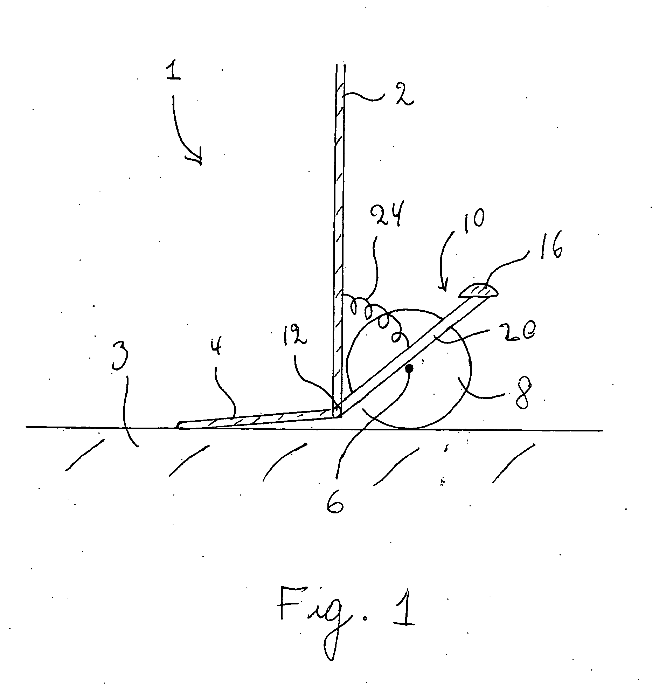

The arm 20 and the bracket 122 may be connected with retracting means. These may be designed e.g. in the form of a spring 24 (Fig. 1), so that arm 20 and tilting bracket 122, respectively, are automatically retracted when no operation occurs for putting it up against the support frame 2. The retracting means may, however, be made very different, as the actuation cylinders, which contain hydraulic means combined with springs, may perform the required returning of the tilting bracket 122 or the arm 20. Also, pneumatic means may be used. It may be envisaged, either hydraulically or pneumatically, with retracting mechanisms which are supplied from an already existing source of energy, which may be either hydraulic or pneumatic.

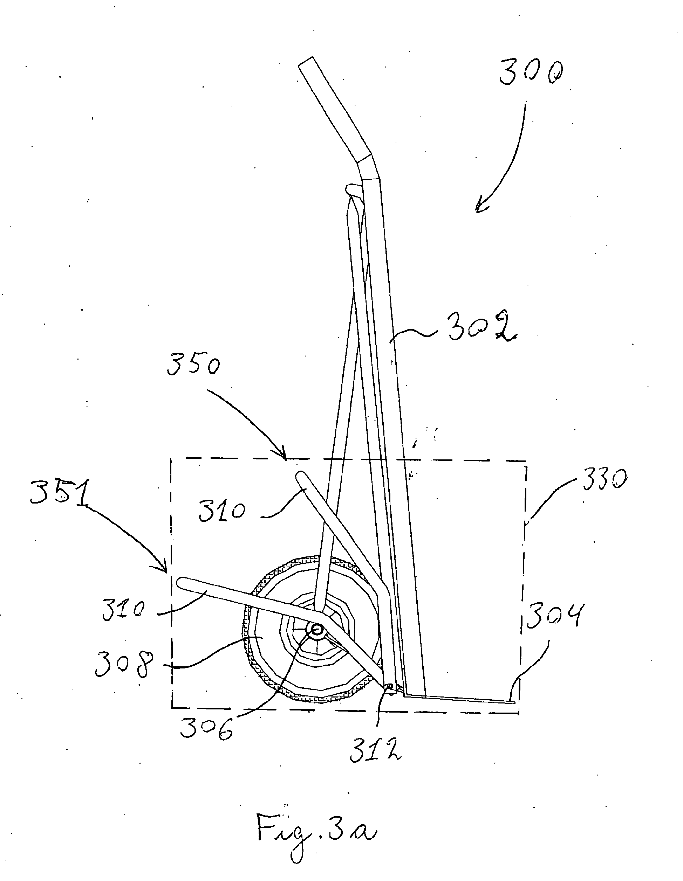

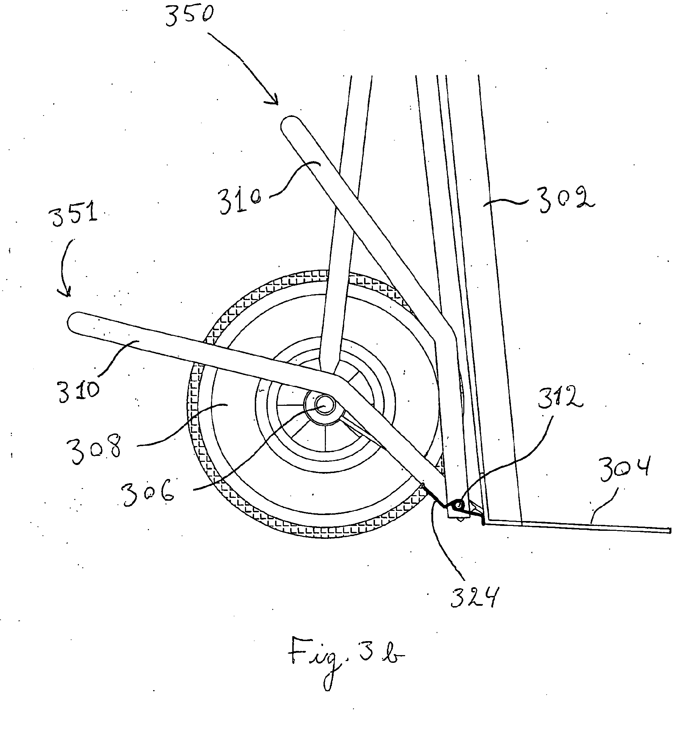

Fig. 3a shows a sack truck 300 consisting of a frame 302 and a carrier means 304. The sack truck has an axle 306 about which there is shown a wheel 308. The Figure also shows a tilting bracket 310 which on Fig. 3 is shown in a first position 350, where the bracket is passive, and an active position 351 where the bracket can be applied. The tilting bracket 310 is fastened to the frame 302 by means of a bearing 312.

Fig. 3b shows an enlarged detail of the indicated square 330. On Fig. 3a is seen that tilting bracket 310 interacts with a torsion spring 324 urging the tilting bracket 310 in direction towards its passive position.

When using a sack truck as the one described on Fig. 3, the tilting means 310 are used in assisting tilting of the sack truck 300, if a relatively heavy load is placed on the carrier means 304. The tilting bracket 310 is activated, e.g. with a foot, to the position 351, after which a person, simultaneously pulling the handle of the frame at the top, presses with a foot on the tilting bracket 310. As the person operating the sack truck has the possibility of placing a large part of the person's body weight on the tilting bracket 310, which acts as a lever arm pivoting about the axle 306, a substantial aid in achieving tilting and lifting is provided for achieving tilt and lift of even very heavy burdens.

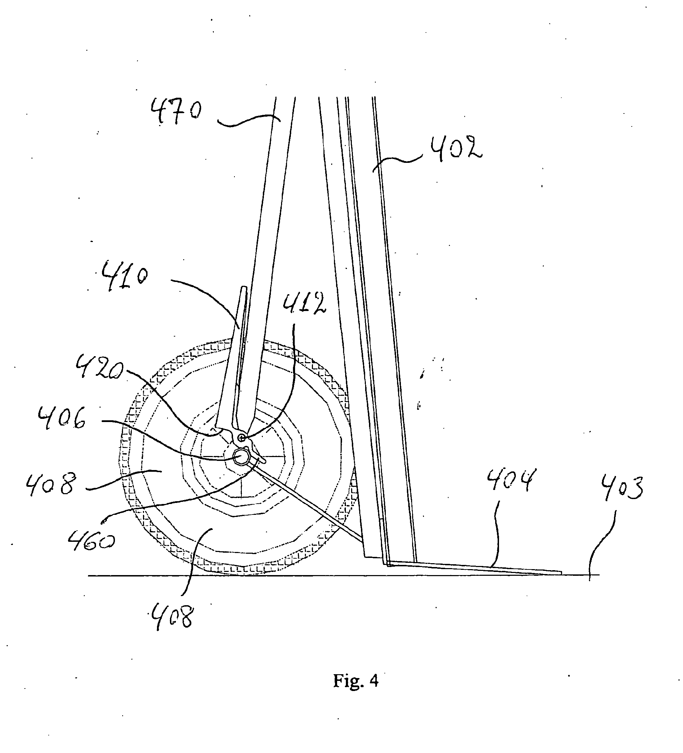

Fig. 4 shows an alternative embodiment for Fig. 3, where Fig. 4 shows a frame 402 that is connected with a carrier means 404. Moreover, an axle 406 is shown to which a wheel 408 is fastened. A tilting plate 410 is pivotably connected to a support frame 470 by means of a bearing 412, the support frame simultaneously connected with the axle 406. The tilting plate 410 is designed with a bearing face 420.

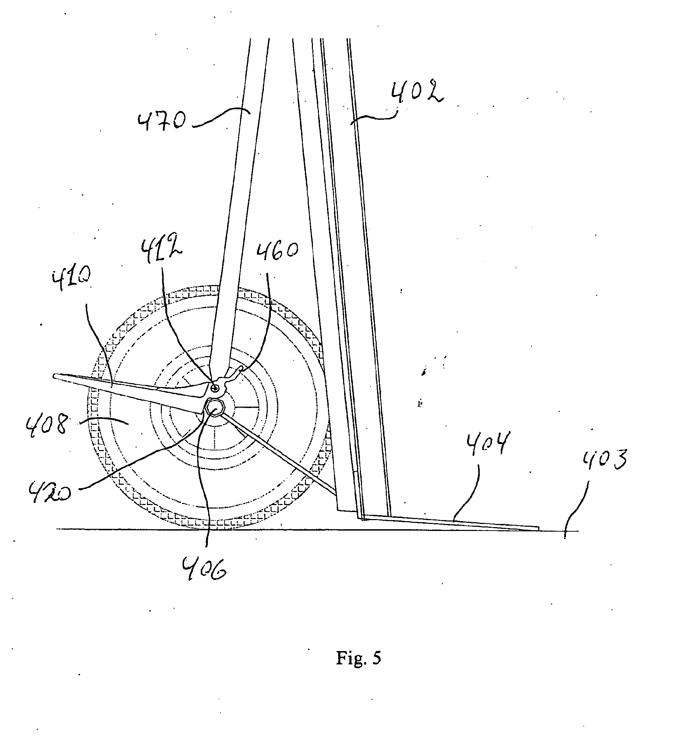

Fig. 5 shows the same embodiment as Fig. 4, however with the variation that the tilting plate 410 is here in an active position. The Figure shows a frame 402 to which a carrier means 404 is fastened, where there is also shown an axle 406 which is connected to a wheel 408. The tilting plate 410 rotates about a bearing 412 where the tilting plate has a bearing surface 420 for bearing against the axle 406. The bearing 412 is disposed on a support frame 470 which is also connected with the axle 406.

Below, a common description of functions for the Figs. 4 and 5 follows.

While operating a sack truck as shown Fig. 4 and 5, a person wishing to lift a heavy burden on the carrier means 404, folds the tilting plate 410 from the position shown on Fig. 4 to the position shown on Fig. 5, after which the person places a foot on the tilting plate 410 and thereby with a part of the body weight of the person performs a pivoting of the entire sack truck about the axle 406, where the tilting plate 410 with its bearing face 420 press on the axle and applies a force to it in desired direction. Thus a force amplification is effected, as an arm originating from the point of action of the tilting plate forms a first arm until the bearing point 412, while the second arm, to which the forces in principle are transmitted, is formed by the distance from the bearing point 412 to the bearing of the bearing face 420 against the axle 406. Hereby is achieved a very efficient amplification of force that facilitates lifting and tilting of heavy loads.

## Claims

1. A sack truck (1) with
a support frame (2) which is fastened to a carrier means (4),
where the support frame (2) and the carrier means (4) are connected to at least one axle (6),
where at least one wheel (8) is provided rotatably on the axle (6),
where the sack truck includes tilting means (10) for assisting in tilting the support frame (2) and the carrier means (4),
where the tilting means (10) is fastened rotatably to a bearing (12),
where the tilting means (10) have a first inactive position, where the tilting means (10) are disposed substantially along the support frame (2),
**characterised in that**
the tilting means (10) are foot operated,
the bearing (12) is fixed to the sack truck (1),
and the foot-operated tilting means (10) have at least a second position where the tilting means (10), when applied or actuated, bear on the axle (6),
where foot-operation of the tilting means (10) cause a pivoting movement of the support frame (2) and the carrier means (4) around the axle (6).

2. A sack truck according to claim 1, **characterised in that** between the frame (4) and the tilting means (10) there are retracting means (24), where the retracting means (24) move the tilting means (10) from the second position to the first inactive position, where the tilting means (10) are disposed substantially along the support frame (4).

3. A sack truck (1) according to claim 1 or 2, **characterised in that** the tilting means (10) are designed as an arm (20) with a foot lever (16), where the arm (20) is pivotably fastened to the connecting point (12).

4. A sack truck (1) according to claim 1 or 2, **characterised in that** the tilting means (10) are designed as tilting bracket (22) with two arms (18) which are pivotably fastened to the connecting points (14).

5. A sack truck (1) according to claim 1 - 4, **characterised in that** the arms (16, 20) are telescoping.

6. A sack truck (1) according to claim 1 - 5, **characterised in that** carrier means (2) is fastened pivotably to the support frame (4), so that it has a first position substantially perpendicular to the support frame (4), and a collapsed position which is substantially along the support frame (4).

7. A sack truck (1) according to claim 1 - 6, **characterised in that** the support frame (4) is telescoping.

8. A sack truck according to one of claims 1 - 7, **characterised in that** the tilting means are designed as a plate (410) which is pivotably attached via at least one bearing (412) to a support frame (470), where the plate (410) has at least one bearing surface (420), where in operation the bearing face is made to bear on the axle (406).

## Patentansprüche

1. Sackkarre (1) mit einem zu einer Tragvorrichtung (4) befestigten Stützrahmen (2), wobei der Stützrahmen (2) und die Tragvorrichtung (4) zu wenigstens einer Achse (6) befestigt sind, wobei wenigstens ein Rad (8) auf der Achse (6) drehbar angeordnet ist, wo die Sackkarre Kippvorrichtungen (10) zum Helfen beim Kippen des Stützrahmens (2) und der Tragvorrichtung (4) umfasst, wobei die Kippvorrichtung (10) zu einem Lager (12) schwenkbar befestigt ist, wobei sich die Kippvorrichtungen (10) in einer ersten untätigen Position befinden, wo die Kippvorrichtungen (10) sich im wesentlichen entlang dem Stützrahmen (2) angeordnet sind, **dadurch gekennzeichnet, dass** die Kippvorrichtungen (10) fussbetätigt sind, dass das Lager (12) zur Sackkarre (1) befestigt ist, und die fussbetätigten Kippvorrichtungen (10) wenigstens eine zweite Position aufweisen, wo die Kippvorrichtungen (10) wenn im Gebrauch oder betätigt von der Achse (6) unterstützt werden, wobei Fussbetätigung der Kippvorrichtungen (10) eine Drehbewegung des Stützrahmens (2) und der Tragvorrichtung (4) um die Achse (6) veranlässt.

2. Sackkarre nach Anspruch 1, **dadurch gekennzeichnet, dass** Einziehmittel (24) zwischen dem Rahmen (4) und der Kippvorrichtung (10) angeordnet sind, wobei die Einziehmittel (24) die Kippvorrichtung (10) von einer zweiten Position zu einer ersten untätigen Position bewegen, wobei die Kippvorrichtungen (10) im wesentlichen entlang dem Stützrahmen (4) angeordnet sind.

3. Sackkarre (1) nach Anspruch 1 oder 2, **dadurch gekennzeichnet, dass** die Kippvorrichtungen (10) als ein Arm (20) mit einem Fusshebel (16) gestaltet sind, wobei der Arm (20) zum Verbindungspunkt (12) schwenkbar befestigt ist.

4. Sackkarre (1) nach Anspruch 1 oder 2, **dadurch gekennzeichnet, dass** die Kippvorrichtungen (10) als ein mit zwei zu den Verbindungspunkten (14) befestigten Armen (18) versehener Kippträger (22) gestaltet ist.

5. Sackkarre (1) nach Anspruch 1-4, **dadurch gekennzeichnet, dass** die Arme (16, 20) teleskopierend sind.

6. Sacldzarre (1) nach Anspruch 1-5, **dadurch gekennzeichnet, dass** die Tragvorrichtung (2) zum Stützrahmen (4) schwenkbar befestigt ist, so dass sie eine erste, hauptsächlich senkrecht auf dem Stützrahmen (4) befindliche sowie eine eingefaltete, hauptsächlich entlang dem Stützrahmen (4) befindliche Position aufweist.

7. Sackkarre (1) nach Anspruch 1-6, **dadurch gekennzeichnet, dass** der Stützrahmen (4) teleskopierend ist.

8. Sackkarre nach irgendeinem der Ansprüche 1-7, **dadurch gekennzeichnet, dass** die Kippvorrichtungen als eine durch wenigstens ein Lager (412) mit einem Stützrahmen (470) schwenkbar verbundene Platte (410) gestaltet sind, wobei die Platte (410) wenigstens eine Anlagefläche (420) aufweist, wobei die Anlagefläche im Betrieb zum Stützen auf der Achse (406) vorgesehen ist.

## Revendications

1. Diable (1) avec un cadre support (2) qui est fixé à un moyen porteur (4), où le cadre support (2) et le moyen porteur (4) sont connectés à au moins un essieu (6), où au moins une roue (8) est prévue de façon rotative sur l'essieu (6), où le diable comprend des moyens d'inclinaison (10) pour assister à l'inclinaison du cadre support (2) et le moyen porteur (4), où le moyen d'inclinaison (10) est fixé de façon rotative à un palier (12), où les moyens d'inclinaison (10) ont une première position inactive, dans laquelle les moyens d'inclinaison (10) sont disposés sensiblement le long du cadre support (2), **caractérisé en ce que** les moyens d'inclinaison (10) sont commandés au pied, le palier (12) est fixé sur le diable (1), et les moyens d'inclinaison actionnés au pied (10) ont au moins une seconde position dans laquelle les moyens d'inclinaison (10), lorsqu'ils sont appliqués ou actionnés, s'appuient sur l'essieu (6), où la commande au pied des moyens d'inclinaison (10) provoque un mouvement de pivotement du cadre support (2) et les moyens porteurs (4) autour de l'essieu (6).

2. Diable selon la revendication 1, **caractérisé en ce qu'**entre le cadre (4) et le moyen d'inclinaison (10) il y a des moyens de rétraction (24), où les moyens de rétraction (24) déplacent les moyens d'inclinaison (10) de la seconde position à la première position inactive, où les moyens d'inclinaison (10) sont disposés sensiblement le long du cadre support (4).

3. Diable (1) selon la revendication 1 ou 2, **caractérisé en ce que** les moyens d'inclinaison (10) sont conçus sous la forme d'un bras (20) (16), avec un levier actionné au pied, où le bras (20) est fixé de façon pivotante au point de connexion (12).

4. Diable (1) selon la revendication 1 ou 2, **caractérisé en ce que** les moyens d'inclinaison (10) sont conçus en tant que support d'inclinaison (22) avec deux bras (18) qui sont fixés de façon pivotante aux points de connexion (14).

5. Diable (1) selon la revendication 1 - 4, **caractérisé en ce que** les bras sont télescopiques (16, 20).

6. Diable (1) selon la revendication 1-5, **caractérisé en ce qu'**un moyen transport (2) est fixé de manière pivotante sur le cadre support (4), de sorte qu'il présente une première position sensiblement perpendiculaire au cadre support (4), et une position repliée qui est sensiblement le long du cadre support (4).

7. Diable (1) selon la revendication 1 - 6, **caractérisé en ce que** le cadre support (4) est télescopique.

8. Diable selon l'une des revendications 1-7, **caractérisé en ce que** les moyens d'inclinaison sont conçus comme une plaque (410) qui est fixée de manière pivotante par l'intermédiaire d'au moins un palier (412) à un cadre support (470), où la plaque (410) comporte au moins une surface d'appui (420), où, en fonctionnement, la surface d'appui est constituée pour s'appuyer sur l'essieu (406).
